# EUROPÄISCHE PATENTSCHRIFT

(11) **EP 1 115 602 B1**
(45) Veröffentlichungstag und Bekanntmachung des Hinweises auf die Patenterteilung: **09.04.2003**
(21) Anmeldenummer: 99936558.8
(22) Anmeldetag: 16.07.1999
(51) Int. Cl.: B60T 13/52

(54) **UNTERDRUCKBREMSKRAFTVERSTÄRKER**
VACUUM BRAKE BOOSTER
AMPLIFICATEUR DE FREINAGE A VIDE

(30) Priorität: 26.09.1998 DE 19844233
(43) Veröffentlichungstag der Anmeldung: 18.07.2001
(73) Patentinhaber: Continental Teves AG & Co. oHG, 60488 Frankfurt (DE)
(72) Erfinder: SCHONLAU, Jürgen, D-65396 Walluf (DE); HARTH, Ralf, D-64297 Darmstadt (DE); KLEY, Uwe, D-60433 Frankfurt am Main (DE); FELLINGER, Rolf, D-56414 Dreikirchen (DE); LINKENBACH, Steffen, D-65760 Eschborn-Niederhöchstadt (DE)
(86) Internationale Anmeldenummer: EP9905095
(87) Internationale Veröffentlichungsnummer: WO00018627

(56) Entgegenhaltungen:
- DE-A- 19 537 660
- DE-U- 8 908 040
- GB-A- 2 051 270

## Beschreibung

Die Erfindung betrifft einen Unterdruckbremskraftverstärker, mit einem in einem Unterdruckgehäuse axial verschiebbaren Ventilkolben mit Pedaldruckstange zur Belüftung eines Arbeitsdruckraumes vor einem Membranteller im Zuge einer Bremsung, ferner mit einem Steuergehäuse sowie mit einem an den Ventilkolben angeschlossenen Tellerventil, und mit einem Luftfilter zur Reinigung und Geräuschdämmung der in das Unterdruckgehäuse bzw. die Arbeitsdruckkammer eintretenden Außenluft.

Unterdruckbremskraftverstärker bzw. Vakuumbremskraftverstärker sind in vielfacher Ausgestaltung im Automobilbau bekannt. Die Bremskraft wird dabei regelmäßig über die mit einem Bremspedal in Verbindung stehende Pedaldruckstange auf den unterdruckbremskraftverstärker und schließlich auf den mit diesem verbundenen Hauptzylinder übertragen. In Löse- bzw. Bereitschaftsstellung herrscht auf beiden Seiten des Membrantellers der gleiche Unterdruck. Eine zugehörige Druckfeder innerhalb des Unterdruckgehäuses bzw. pneumatischen zylinderdruckgehäuses hält den Membranteller in seiner Ausgangsstellung. Ein zugeordneter Vakuumkanal, welcher die beiden Zylinderräume über das Tellerventil pneumatisch voneinander trennt, ist geöffnet.

Bei Betätigung des Bremspedals wird zunächst der vorgenannte Vakuumkanal mittels des Ventilkolbens mit angeschlossenem Tellerventil geschlossen und im weiteren Verlauf der Bewegung ein Außenluftkanal geöffnet, so daß der im Arbeitsdruckraum herrschende Unterdruck abgebaut wird. Folglich herrscht zwischen dem vorderen und dem hinteren Raum des Verstärkers (pedalseitiger Arbeitsdruckraum bzw. Verstärkerraum) ein Druckunterschied, welcher den Membranteller in Richtung auf den angeschlossenen (Tandem -)Hauptzylinder drückt und so die Fußkraft unterstützt. Die solchermaßen aufgebaute Bremsverstärkung bzw. Hilfskraft bemißt sich nach dem Produkt aus Differenzdruck und Membrantellerfläche. Der vorgenannte Unterdruckabbau im Verstärkerraum erfolgt solange, bis der im angeschlossenen Hauptzylinder erzeugte hydraulische Druck den Ventilkolben zum Stillstand kommen läßt. Gleichzeitig unterbricht das Tellerventil die Außenluftzufuhr. Jetzt ist eine Bereitschaftsstellung erreicht, bei welcher jede geringfügige Änderung des Druckes am Bremspedal eine Vergrößerung oder Verkleinerung der Druckdifferenz auf beiden Seiten des Membrantellers und damit eine Erhöhung oder Reduzierung der Abbremsung bewirkt.

In sogenannter Vollbremsstellung ist der Vakuumkanal geschlossen und der Außenluftkanal ständig geöffnet. Demzufolge herrscht auf beiden Seiten des Membrantellers die größtmögliche Druckdifferenz und damit maximale Bremskraftverstärkung. Eine weitere Erhöhung der Bremskraft ist nur durch Erhöhung der Fußkraft möglich.

Bei einem Unterdruckbremskraftverstärker des eingangs beschriebenen Aufbaus ist ein Luftfilter vorgesehen, welcher grundsätzlich in einer die Pedaldruckstange umgebenden Hülse angeordnet ist. Zusätzlich wird hier schalldämpfendes Material als hohlzylinderförmige Auskleidung an der Innenwand der Hülse vorgeschlagen, wobei das vorgenannte schalldämpfende Material die Pedaldruckstange mit radialem Abstand umgibt, so daß die durch einen Ringkanal strömende Luft entlang der schalldämpfenden Auskleidung strömt. Hierdurch hat man versucht, bei einem Unterdruckbremskraftverstärker ohne eine Durchmesservergrößerung im Bereich der luftführenden Kanäle und ohne eine Verlängerung der Ansprechzeit des Bremskraftverstärkers das Luftansauggeräusch erheblich zu dämpfen (vergleiche DE-PS 29 18 734).

Die vorgenannte Ausgestaltung ist nicht frei von Mängeln, insbesondere was den Herstellungsaufwand angeht. So ist es vorliegend erforderlich, die hohlzylindrische Auskleidung aus schallabsorbierendem Material an die Hülse anzukleben. Derartige Vorgehensweisen lassen sich kaum automatisieren, wobei zusätzlich Fertigungsungenauigkeiten schwer zu beherrschen sind. - Hier setzt die Erfindung ein.

Der Erfindung liegt das technische Problem zugrunde, einen Unterdruckbremskraftverstärker des eingangs beschriebenen Aufbaus so weiterzubilden, daß bei einwandfreier Filterung und/oder Schalldämpfung der Außenluft eine einfache und kostengünstige Fertigung gelingt.

Zur Lösung dieser Aufgabe schlägt die Erfindung bei einem gattungsgemäßen Bremskraftverstärker vor, daß der Luftfilter im oder am Ventilkolben angeordnet ist und in Verbindung mit einem zugehörigen Ventilkolbendichtsitz (für den hieran anlegbaren Luftfilter) einen veränderbaren Einströmquerschnitt für durch das Tellerventil strömende Außenluft bildet. Dabei strömt die Außenluft durch den Luftfilter und/oder daran vorbei. Der Luftfilter kann von seinen Außenabmessungen her über den Ventilkolbendichtsitz überstehen, auf Dichtsitzhöhe des Ventilkolbens abschließen oder sich eben im Ventilkolben befinden.

Bei dem Luftfilter handelt es sich nach bevorzugter Ausführungsform um eine Ringscheibe mit Zentralbohrung für die hierdurch geführte Pedaldruckstange. Folglich kann auf einen einfach und preisgünstig herzustellenden Massenartikel zurückgegriffen werden. Dies gilt besonders auch für den Fall, daß der Luftfilter aus einem elastischen Material vorgegebener Nachgiebigkeit, beispielsweise einem PUR (Polyurethan)- Schaum, gefertigt oder starr ausgebildet ist. Zusätzlich oder alternativ besteht darüberhinaus die Möglichkeit, den Luftfilter mittels einer Feder oder dergleichen elastisch nachgebendem oder nachgiebigem Element an den Ventilkolben anzuschließen.

Dies alles wird regelmäßig aus dem Grund verfolgt, weil der Ventilkolbendichtsitz üblicherweise ein randseitiges Leitblech mit vorspringender Anschlagkante aufweist. Diese Anschlagkante kann über eine von dem Ventilsitz definierte Ventilsitzebene um ein vorgegebenes Maß vorragen. Selbstverständlich ist auch eine rückspringende Bauweise denkbar. Sie, d.h. die Anschlagkante, taucht regelmäßig bei am Ventilsitz anliegenden oder um ein vorgegebenes Spaltmaß von dem Ventilsitz abgehobenen Luftfilter in den Luftfilter ein, so daß durch das Tellerventil strömende Außenluft zwingend den Luftfilter passieren muß. Diese Außenluft wird folglich zunächst durch einen Ringkanal zwischen Pedaldruckstange und die Pedaldruckstange aufnehmender Hülse geführt und dann S-förmig durch den Luftfilter und anschließend in den Arbeitsdruckraum geleitet. Demzufolge wird bei der vorgenannten Stellung des Ventilkolbens bzw. des Tellerventiles eine einwandfreie Schalldämpfung erreicht, weil die in den Arbeitsdruckraum einströmende Außenluft obligatorisch den (üblicherweise aus Schaumstoff bestehenden) Luftfilter passieren muß. Eine solche Stellung korrespondiert im allgemeinen zur Bereitschafts- bzw. Teilbremsstellung.

Bei einer Vollbremsung oder schnellen Betätigung des Bremspedales und damit der Pedaldruckstange (Notbremsung) wird der Luftfilter von dem Ventilsitz um ein vorgegebenes Öffnungsmaß entfernt. Gleichzeitig taucht die Anschlagkante in den Luftfilter nicht mehr ein, ist vielmehr von dem Luftfilter abgehoben. Folglich definiert die Anschlagkante mit dem Luftfilter einer Einströmöffnung, so daß durch das Tellerventil strömende Außenluft durch den Luftfilter (S-förmig) umgelenkt wird und durch die Einströmöffnung zufließt. Auch in diesem Fall gelingt eine einwandfreie Schalldämpfung, und zwar dergestalt, daß die durch den Ringkanal zuströmende Außenluft gleichsam auf den Luftfilter prallt und durch diesen in die Einströmöffnung umgelenkt wird. Folglich erfolgt eine Schalldämpfung gleichsam auf zweierlei Art und Weise. Nämlich zum einen durch die poröse und schallschluckende Oberfläche des Filters als gleichsam Prallfläche und zum anderen durch die Umlenkung des Luftstromes.

Eine aus fertigungs- und montagetechnischer Sicht besonders bevorzugte Ausgestaltung ist dadurch gekennzeichnet, daß der Ventilkolben einen pedaldruckstangenseitigen, im Querschnitt U-förmigen, Fortsatz unter Bildung einer Einsetzmulde für den Luftfilter aufweist. Dieser Fortsatz und der Luftfilter können rotationssymmetrisch im Vergleich zur durch die Pedalstange definierten Achse ausgebildet sein. Im allgemeinen sind der Luftfilter und der Fortsatz koaxial und konzentrisch mit Bezug zur zentral angeordneten Pedaldruckstange angeordnet.

Im Ergebnis wird eine besonders einfach herzustellende und leicht zu montierende Baueinheit zur Verfügung gestellt.

Hierfür sorgt zunächst einmal der Luftfilter, welcher im einfachsten Fall als ausgestanztes Kunststoff-(Schaumstoff) Formteil ausgeführt sein kann. Auch die Montage gelingt unschwer, weil der Ventilkolben eine praktisch an den Außendurchmesser des Luftfilters angepaßte Einsetzmulde aufweist, in welcher der Luftfilter problemlos plaziert werden kann. Eine zusätzliche adhäsive Befestigung des Luftfilters in der Einsetzmulde ist möglich, jedoch nicht unbedingt erforderlich. Im Vergleich zum Stand der Technik nach der DE-PS 29 18 734 können besondere Ausgestaltungen an der die Pedaldruckstange umgebenden Hülse entfallen, so daß mit veringerten Fertigungs- und Montagekosten zu rechnen ist. Gleichzeitig werden zumindest die gleichen oder sogar bessere Geräuschdämmeigenschaften wie beim Stand der Technik erreicht. Der Luftfilter besitzt eine bestimmte Nachgiebigkeit (Elastizität), so daß entweder eine Luftführung durch ihn hindurch oder an ihm vorbei erfolgt. Letzteres ist besonders bei einer schnellen Betätigung des Ventilkolbens erforderlich, und zwar im Zusammenhang mit einer Quasi-Notbremsung. Durch die vorgenannte Betriebsweise erfolgt eine besonders schnelle Belüftung der Arbeitsdruckkammer bzw. des Verstärkerraumes, da der Außenlufteintritt praktisch ungehindert erfolgt. Im erstgenannten Fall ist die Nachgiebigkeit des Filterelementes ausreichend, um mittels des Leitbleches die Hindurchleitung der Außenluft durch den Filter zu bewirken. Der hierzu zur Verfügung gestellte Einströmquerschnitt reicht für normale Betriebsbremsungen aus. Hierin sind die wesentlichen Vorteile der Erfindung zu sehen.

Im folgenden wird die Erfindung anhand einer lediglich ein Ausführungsbeispiel darstellenden Zeichnung näher erläutert; es zeigen:
- Figur 1: einen Schnitt durch einen Unterdruckbremskraftverstärker, und zwar im Bereich des Steuergehäuses mit Ventilkolben;
- Figuren 2a bis 2c: verschiedene Funktionsstellungen des Ventilkolbens mit Tellerventil und
- Figur 3: eine andere Ausgestaltung der Erfindung.

In den Figuren ist ein Ausschnitt aus einem Unterdruckbremskraftverstärker gezeigt, welcher in seinem grundsätzlichen Aufbau ein Unterdruckgehäuse mit einem darin axial verschiebbaren Ventilkolben 1 mit Pedaldruckstange 2 aufweist. Die Pedaldruckstange 2 dient zur Belüftung eines Arbeitsdruckraumes vor einem Membranteller im Zuge einer Bremsung. Dieser Arbeitsdruckraum ist folglich pedalseitig des Membrantellers angeordnet und wird auch als Verstärkerraum bezeichnet. Darüberhinaus finden sich ein Steuergehäuse 3 sowie ein an den Ventilkolben 1 angeschlossenes Tellerventil 4. Schließlich ist noch ein Luftfilter 5 zur Reinigung und Geräuschdämmung der in das Unterdruckgehäuse bzw. die Arbeitsdruckkammer eintretenden Außenluft vorgesehen.

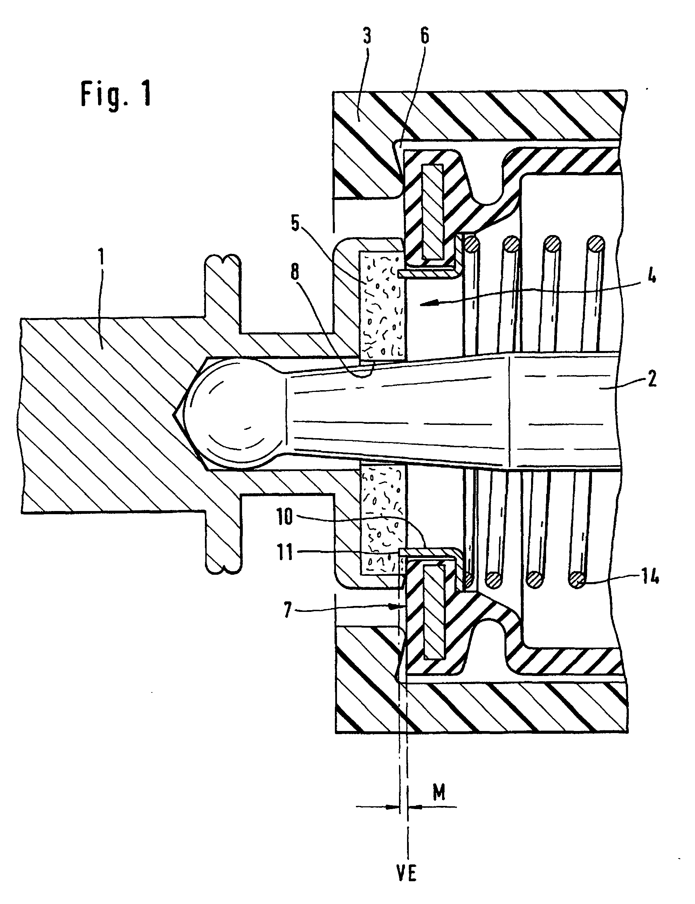

Die Betätigung erfolgt wie üblich, wobei auf die Beschreibungseinleitung Bezug genommen sei. In Kurzform wiederholend schließt bei Betätigung des Bremspedals das Tellerventil 4 zunächst einen Vakuumkanal 6, welcher den pedalseitigen Verstärkerraum bzw. Arbeitsdruckraum mit dem Raum auf der anderen Seite des Membrantellers verbindet (vergleiche Figur 1, 2a und 3). Im weiteren Verlauf der Bewegung gelangt Außenluft in das Unterdruckgehäuse bzw. die Arbeitsdruckkammer.

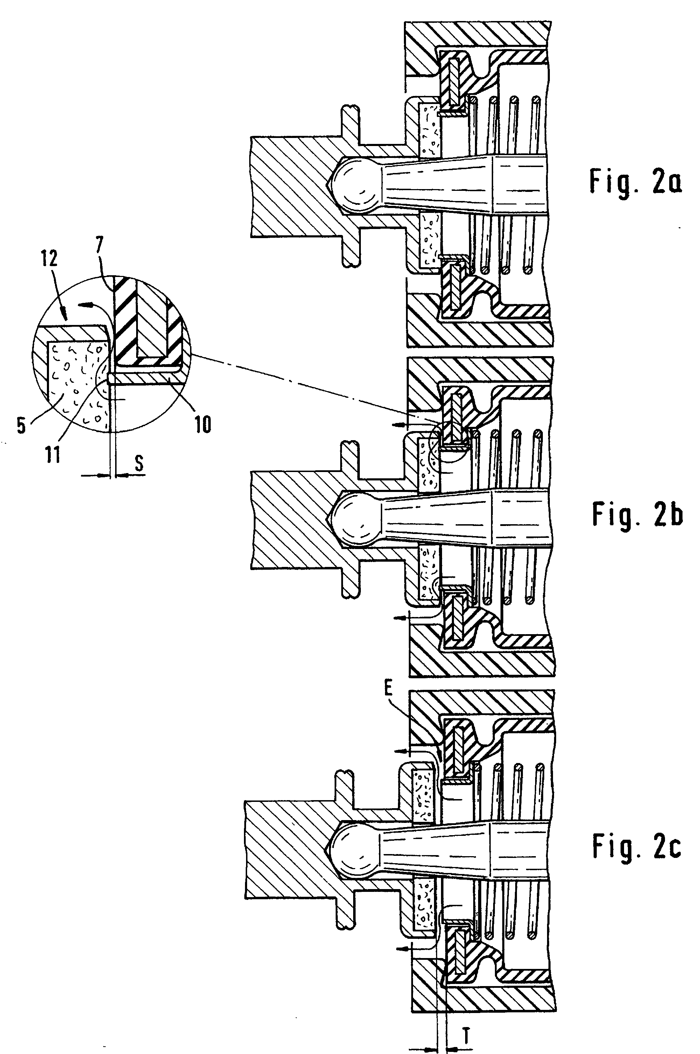

Zu diesem Zweck ist der Luftfilter 5 im Ventilkolben 1 angeordnet und bildet in Verbindung mit einem zugehörigen Ventilkolbendichtsitz 7 für den hieran anlegbaren Luftfilter 5 einen veränderbaren Einströmquerschnitt für durch das Tellerventil 4 strömende Außenluft. Das heißt, die Außenluft strömt in der in den Figuren 2b und 2c gezeigten Art und Weise durch das Tellerventil 4 (vergleiche Figur 2b) beziehungsweise an diesem vorbei (vergleiche Figur 2c).

Der Luftfilter 5 ist vorliegend als Ringscheibe mit Zentralbohrung 8 für die hierdurch geführte Pedaldruckstange 2 ausgebildet. Er (der Luftfilter 5) besteht aus einem elastischen Material, beispielsweise PUR-Schaum. Alternativ hierzu ist auch eine starre Ausgestaltung denkbar. Darüberhinaus kann der Luftfilter nach einer weiteren Ausgestaltung mittels einer Feder 9 an den Ventilkolben 1 angeschlossen sein. Anstelle der Feder 9 kann auch ein beliebiges elastisch nachgiebiges Element an dieser Stelle, das heißt zwischen Luftfilter 5 und Ventilkolben 1, zum Einsatz kommen.

Der ringförmige Ventilkolbendichtsitz 7 weist ein randseitiges Leitblech 10 mit vorspringender Anschlagkante 11 auf. Die vorgenannte Anschlagkante 11 ragt über eine Ventilsitzebene VE um ein vorgegebenes Maß M vor. Die Ventilsitzebene VE wird von dem Ventilsitz 7 definiert, welcher vorliegend als Kreisring ausgeführt ist und vom Durchmesser her an das zylindrische Steuergehäuse 3 angepaßt ist. Jedenfalls definiert der kreisringförmige Ventilsitz 7 die genannte Ventilsitzebene VE. Zur Halterung des Leitbleches 10 ist eine Feder 14 vorgesehen, welche das Leitblech 10 an die Unterseite einer von dem kreisringförmigen Ventilsitz 7 umschlossenen Öffnung drückt. Bei am Ventilsitz 7 anliegendem Luftfilter 5 taucht die Anschlagkante 11 in den Luftfilter 5 ein, so daß keine Außenluft einströmen kann. Sobald der Luftfilter 5 von dem Ventilsitz 7 um ein vorgegebenes Spaltmaß S abgehoben ist, kann Außenluft durch den genannten Spalt in den Arbeitsdruckraum eintreten, und zwar S-förmig durch den Luftfilter 5 geführt, weil die Anschlagkante 11 unverändert in den Luftfilter 5 eintaucht. Diese geometrischen Verhältnisse sind insbesondere in der Figur 2b dargestellt.

Sofern der Luftfilter 5 von dem Ventilsitz 7 um ein vorgegebenes Öffnungsmaß T entfernt ist, ist die Anschlagkante 11 von dem Luftfilter 5 abgehoben. Das Öffnungsmaß T ist größer als das maximale Spaltmaß Smax, welches immer noch gewährleistet, daß die Anschlagkante 11 in den Luftfilter 5 eintaucht. Das heißt, es gilt:
T > Smax.

Zur Aufnahme des Luftfilters 5 weist der Ventilkolben 1 einen pedaldruckstangenseitigen, im Querschnitt U-förmigen, Fortsatz 12 auf, welcher eine Einsatzmulde 13 für den Luftfilter 5 bildet. Der Fortsatz 12 und der Luftfilter 5 sind rotationssymmetrisch im Vergleich zur durch die Pedaldruckstange 2 definierte Achse A ausgebildet. Darüberhinaus sind der Luftfilter 5 und der Fortsatz 12 koaxial und konzentrisch mit Bezug zur zentral angeordnetem Pedaldruckstange 2 angeordnet.

Bei einer Teilbremsung bzw. einem leichten Abheben des Luftfilters 5 bzw. des Ventilkolbens 1 von seinem Ventilsitz 7 gelangt Außenluft in der in Figur 2b gezeigten Art und Weise unter Passierung des Spaltmaßes S durch den Luftfilter 5 hindurch in die Arbeitsdruckkammer. Eine Geräuschdämmung geschieht folglich durch die zwingende Luftführung durch den Luftfilter 5 hindurch. Gleichzeitigöffnet sich der Strömungsquerschnitt nach Passieren des Luftfilters 5 praktisch konisch in der Art eines Diffusors, was zusätzlich zur Geräuschminderung beiträgt.

Letzteres gilt auch für den Fall, daß eine schnelle Betätigung der Pedaldruckstange 2 erfolgt bzw. eine Vollbremsung oder Notbremsung nachgefragt wird. Im Unterschied zur vorstehenden Luftführung ist nun jedoch ein Öffungsmaß T zwischen Ventilsitz 7 und Luftfilter 5 verwirklicht, das heißt, die Anschlagkante 11 ist von dem Luftfilter 5 abgehoben. Dementsprechend kann die Luft an dieser Stelle ungehindert an dem Luftfilter 5 vorbeiströmen und wird hier nur noch abgelenkt, und zwar wiederum S-förmig. Dabei definieren Anschlagkante 11 und Luftfilter 5 eine Einströmöffnung E (vgl. Figur 2c). Eine Geräuschdämpfung geschieht dergestalt, daß zunächst einmal der Luftstrom zweifach umgelenkt wird, zusätzlich beim Einströmen auf den porösen Luftfilter 5 trifft und darüberhinaus die bereits beschriebene diffusorartige Strömungsquerschnittserweiterung beibehalten wird.

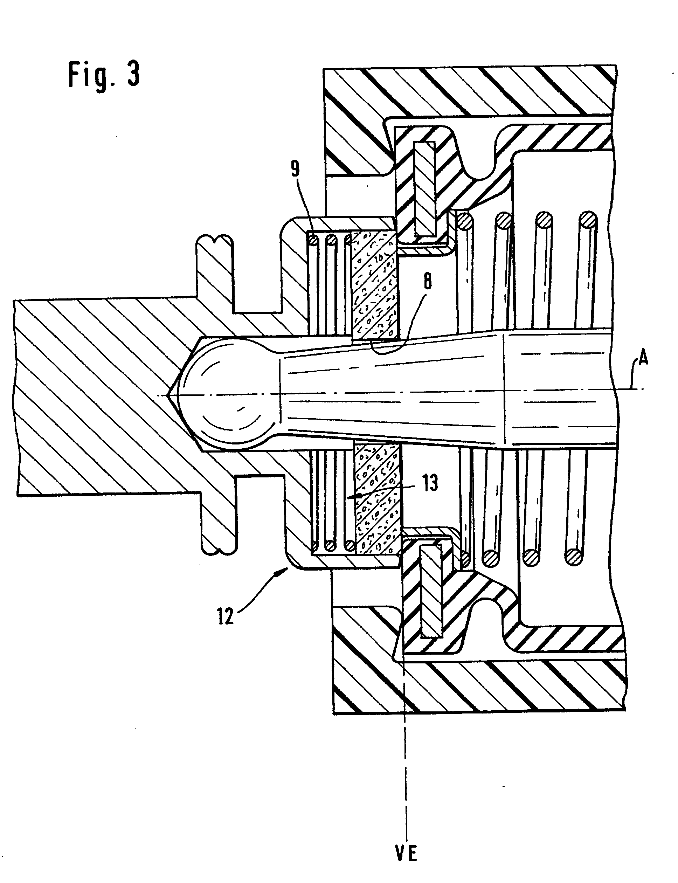

Vergleichbare Vorteile und Wirkungen gelten für eine Variation der Erfindung, wie sie in der Figur 3 dargestellt ist. Dort ist der Luftfilter 5 starr ausgeführt, wobei für eine entsprechende elastische Nachgiebigkeit eine zwischen Luftfilter 5 und Ventilkolben 1 angeordnete Feder 9 sorgt. Hier gibt die Feder 9 bei langsamer Betätigung des Ventilkolbens 1 nach, so daß die Außenluft unverändert durch den Luftfilter 5 zufließt. Erst bei Erreichen des Öffnungsmaßes T erfolgt kein Nachgeben der Feder 9 mehr, und zwar mit dem Ergebnis, daß Anschlagkante 11 und Luftfilter 5 wiederum die Einströmöffnung E bilden. - Selbstverständlich ist die vorstehende Variante auch in Verbindung mit einem elastischen Luftfilter 5 denkbar.

## Patentansprüche

1. Unterdruckbremskraftverstärker, mit einem in einem Unterdruckgehäuse axial verschiebbaren Ventilkolben (1) mit Pedaldruckstange (2), ferner mit einem an den Ventilkolben (1) angeschlossenen Tellerventil (4), und mit einem Luftfilter (5), **dadurch gekennzeichnet, daß** der Luftfilter (5) im oder am Ventilkolben (1) angeordnet ist und in Verbindung mit einem zugehörigen Ventilkolbendichtsitz (7) einen Veränderbaren Einströmquerschnitt für durch das Tellerventil (4) strömende Außenluft bildet.

2. Unterdruckbremskraftverstärker nach Anspruch 1, **dadurch gekennzeichnet, daß** der Luftfilter (5) als Ringscheibe mit Zentralbohrung (8) für die hierdurch geführte Pedaldruckstange (2) ausgebildet ist.

3. Unterdruckbremskraftverstärker nach Anspruch 1 oder 2, **dadurch gekennzeichnet, daß** der Luftfilter (5) aus einem elastischen Material vorgegebener Nachgiebigkeit, beispielsweise PUR-Schaum gefertigt oder starr ausgebildet ist.

4. Unterdruckbremskraftverstärker nach einem der Ansprüche 1 bis 3, **dadurch gekennzeichnet, daß** der Luftfilter (5) mittels einer Feder (9) oder dergleichen elastisch nachgiebigem Element an den Ventilkolben (5) angeschlossen ist.

5. Unterdruckbremskraftverstärker nach einem der Ansprüche 1 bis 4, **dadurch gekennzeichnet, daß** der Ventilkolbendichtsitz (7) ein randseitiges Leitblech (10) mit vorspringender Anschlagkante (11) aufweist.

6. Unterdruckbremskraftverstärker nach einem der Ansprüche 1 bis 5, **dadurch gekennzeichnet, daß** die Anschlagkante (11) über eine von dem Ventilsitz (7) definierte Ventilsitzebene (VE) um ein vorgegebenes Maß (M) vorragt und bei am Ventilsitz (7) anliegenden oder um ein vorgegebenes Spaltmaß (S) von dem Ventilsitz (7) abgehobenen Luftfilter (5) in den Luftfilter (5) eintaucht, so daß durch das Tellerventil (4) strömende Außenluft zwingend den Luftfilter (5) passieren muß.

7. Unterdruckbremskraftverstärker nach einem der Ansprüche 1 bis 6, **dadurch gekennzeichnet, daß** bei von dem Ventilsitz (7) um ein vorgegebenes Öffnungsmaß (T) entferntem Luftfilter (5) die Anschlagkante (11) von dem Luftfilter (5) abgehoben ist und mit diesem eine Einströmöffnung (E) definiert, so daß durch das Tellerventil (4) strömende Außenluft durch den Luftfilter umgelenkt durch die Einströmöffnung (E) fließt.

8. Unterdruckbremskraftverstärker nach einem der Ansprüche 1 bis 7, **dadurch gekennzeichnet, daß** der Ventilkolben (1) einen pedaldruckstangenseitigen im Querschnitt U-förmigen, Fortsatz (12) unter Bildung einer Einsetzmulde (13) für den Luftfilter (5) aufweist.

9. Unterdruckbremskraftverstärker nach einem der Ansprüche 1 bis 8, **dadurch gekennzeichnet, daß** der Fortsatz (12) und der Luftfilter (5) rotationssymmetrisch im Vergleich zur durch die Pedaldruckstange (2) definierten Achse (A) ausgebildet sind.

10. Unterdruckbremskraftverstärker nach einem der Ansprüche 1 bis 9, **dadurch gekennzeichnet, daß** der Luftfilter (5) und der Fortsatz (12) koaxial und konzentrisch zur zentral angeordneten Pedaldruckstange (2) angeordnet sind.

## Claims

1. Vacuum brake force booster which includes a valve piston (1) with a pedal push rod (2) that is axially slidable in a vacuum housing, further including a poppet valve (4) connected to the valve piston (1), and an air filter (5), **characterized in that** the air filter (5) is arranged in or at the valve piston (1) and, in conjunction with an associated valve piston sealing seat (7), forms a variable flow cross-section for outside air that flows through the poppet valve (4).

2. Vacuum brake force booster as claimed in claim 1,
**characterized in that** the air filter (5) is configured as an annular disc with a central bore (8) for the pedal push rod (2) guided therethrough.

3. Vacuum brake force booster as claimed in claim 1 or claim 2,
**characterized in that** the air filter (5) is made from an elastic material of a predetermined flexibility, for example, a PUR (polyurethane) foam, or has a rigid configuration.

4. Vacuum brake force booster as claimed in any one of claims 1 to 3,
**characterized in that** the air filter (5) is connected to the valve piston (1) by means of a spring (9) or any other elastically flexible element.

5. Vacuum brake force booster as claimed in any one of claims 1 to 4,
**characterized in that** the valve piston sealing seat (7) has at its rim a baffle plate (10) with a protruding stop edge (11).

6. Vacuum brake force booster as claimed in any one of claims 1 to 5,
**characterized in that** the stop edge (11) projects by a predetermined rate (M) from a valve seat plane (VE) defined by the valve seat (7), and plunges into the air filter (5), when the air filter (5) bears against the valve seat (7) or has lifted from the valve seat (7) by a predetermined slot size (S), so that outside air which flows through the poppet valve (4) is forced to pass the air filter (5).

7. Vacuum brake force booster as claimed in any one of claims 1 to 6,
**characterized in that** when the air filter (5) is removed from the valve seat (7) by a predetermined opening rate (T), the stop edge (11) has lifted from the air filter (5) and along with said defines an intake (E) so that outside air which flows through the poppet valve (4) is deviated by the air filter and flows through the intake (E).

8. Vacuum brake force booster as claimed in any one of claims 1 to 7,
**characterized in that** on the side of the pedal push rod, the valve piston (1) includes an extension (12) of a U-shaped cross-section, formed with an insertion cavity (13) for the air filter (5).

9. Vacuum brake force booster as claimed in any one of claims 1 to 8,
**characterized in that** the extension (12) and the air filter (5) are designed rotationally symmetrically in comparison to the axis (A) defined by the pedal push rod (2).

10. Vacuum brake force booster as claimed in any one of claims 1 to 9,
**characterized in that** the air filter (5) and the extension (12) are arranged coaxially and concentrically with respect to the centrally arranged pedal push rod (2).

## Revendications

1. Servofrein à dépression comportant un piston de soupape (1) pouvant coulisser axialement dans un boîtier sous dépression, avec tige de compression de pédale (2), comportant en outre une soupape à siège plan (4) raccordée au piston de soupape (1), et comportant un filtre à air (5), **caractérisé en ce que** le filtre à air (5) est disposé dans ou sur le piston de soupape (1) et forme, en combinaison avec un siège d'étanchéité (7) correspondant au piston de soupape, une section d'entrée variable pour l'air extérieur circulant à travers à la soupape à siège plan (4).

2. Servofrein à dépression selon la revendication 1, **caractérisé en ce que** le filtre à air (5) est réalisé sous la forme d'un disque annulaire à perçage central (8) pour la tige de compression de pédale (2) guidée à travers celui-ci.

3. Servofrein à dépression selon la revendication 1 ou 2, **caractérisé en ce que** le filtre à air (5) est fabriqué dans une matière élastique de souplesse prédéfinie, par exemple en mousse de polyuréthanne, ou est réalisé rigide.

4. Servofrein à dépression selon l'une des revendications 1 à 3, **caractérisé en ce que** le filtre à air (5) est raccordé, au moyen d'un ressort (9) ou élément élastiquement souple similaire, au piston de soupape (5).

5. Servofrein à dépression selon l'une des revendications 1 à 4, **caractérisé en ce que** le siège d'étanchéité (7) du piston de soupape comporte un déflecteur (10) côté bordure avec bord de butée (11) saillant.

6. Servofrein à dépression selon l'une des revendications 1 à 5, **caractérisé en ce que** le bord de butée (11) dépasse d'une cote (M) prédéfinie du plan (VE) du siège de soupape défini par le siège de soupape (7), et, lorsque le filtre à air (5) s'applique contre le siège de soupape (7) ou est soulevé d'une fente (S) prédéfinie du siège de soupape (7), il pénètre dans le filtre à air (5), ce qui fait que l'air extérieur circulant à travers la soupape à siège plan (4) doit forcément traverser le filtre à air (5).

7. Servofrein à dépression selon l'une des revendications 1 à 6, **caractérisé en ce que** dans le cas où le filtre à air (5) est éloigné du siège de soupape (7), d'une ouverture (T) prédéfinie, le bord de butée (11) est soulevé du filtre à air (5) et définit avec celui-ci une ouverture d'entrée (E), ce qui fait que l'air extérieur circulant à travers la soupape à siège plan (4) est dévié par le filtre à air et s'écoule à travers l'ouverture d'entrée (E).

8. Servofrein à dépression selon l'une des revendications 1 à 7, **caractérisé en ce que** le piston de soupape (1) comporte un prolongement (12), de section transversale en U, du côté de la tige de compression de la pédale et forme un renfoncement d'insertion (13) pour le filtre à air (5).

9. Servofrein à dépression selon l'une des revendications 1 à 8, **caractérisé en ce que** le prolongement (12) et le filtre à air (5) présentent une symétrie de révolution par rapport à l'axe (A) défini par la tige de compression (2) de la pédale.

10. Servofrein à dépression selon l'une des revendications 1 à 9, **caractérisé en ce que** le filtre à air (5) et le prolongement (12) sont disposés coaxialement et concentriquement à la tige de compression (2) de la pédale disposée au centre.
